# EUROPÄISCHE PATENTSCHRIFT

(11) **EP 0 754 252 B1**
(45) Veröffentlichungstag und Bekanntmachung des Hinweises auf die Patenterteilung: **15.07.1998**
(21) Anmeldenummer: 95915746.2
(22) Anmeldetag: 03.04.1995
(51) Int. Cl.: D01G 19/26, H02K 21/22

(54) **KÄMMASCHINE MIT ELEKTRISCHEN EINZELANTRIEBEN FÜR MEHRERE ACHSEN**
WOOL-COMBING MACHINE WITH INDIVIDUAL ELECTRIC DRIVES TO SEVERAL SPINDLES
MACHINE DE PEIGNAGE POURVUE D'ENTRAINEMENTS INDIVIDUELS ELECTRIQUES POUR PLUSIEURS ARBRES

(30) Priorität: 07.04.1994 DE 4412021; 17.03.1995 DE 19509210
(43) Veröffentlichungstag der Anmeldung: 22.01.1997
(73) Patentinhaber: CSM-Sächsische Spinnereimaschinen GmbH, 09120 Chemnitz (DE)
(72) Erfinder: BUDIG, Peter-Klaus, D-09122 Chemnitz (DE); ECKSTEIN, Andreas, D-09114 Chemnitz (DE); HERMEYER, Andreas, D-09119 Chemnitz (DE); SCHNABEL, Helmut, D-04703 Leisnig (DE)
(74) Vertreter: Schneider, Manfred
(86) Internationale Anmeldenummer: DE9500461
(87) Internationale Veröffentlichungsnummer: WO9527816

(56) Entgegenhaltungen:
- EP-A- 0 360 064
- EP-A- 0 490 395
- CH-A- 682 674
- DE-A- 3 504 347

## Beschreibung

Die Erfindung bezieht sich auf eine Kämmaschine mit elektrischen Einzelantrieben für mehrere Achsen, mit einer Steuerung zur Synchronisation der Einzelantriebe, mit einem diskontinuierlich angetriebenen Rundkamm und mit einem synchron zum Rundkamm mit Schließbewegung angetriebenen Zangenapparat.

Durch die europäischen Patente 360 064 Al und 374 723 A2 sind Kämmaschinen für das Kämmen von Baumwolle bekannt, bei denen für den Antrieb der Speisewalze und für die Abreißwalze Einzelantriebe vorgesehen sind.

Alle übrigen Antriebe dieser Maschine werden von einer zentralen Hauptwelle angetrieben, der in ansich bekannter Weise eine zentrale Antriebseinheit zugeordnet ist.

Die unterschiedlichen Bewegungen der einzelnen Arbeitselemente werden von der zentralen Hauptwelle über sehr komplizierte Getriebe abgeleitet.
Das betrifft auch den Antrieb des Rundkammes.

Der Rundkamm wird im Interesse eines optimalen Kämmvorganges so angetrieben, daß er während der Kämmphase extrem beschleunigt wird.
In den Phasen
- des Anlegens des durch den Rundkamm gekämmten Faserbartes an das zurückgelieferte Vlies,
- des Fixkämmens und Abreißens sowie
- in der Phase der Bereitstellung eines neuen Faserbartes für das folgende Kammspiel
wird der Rundkamm verzögert und wesentlich langsamer bewegt.

Zur Realisierung dieser diskontinuierlichen Bewegung werden an Kämmaschinen exzentrisch/elyptische Zahnräder oder Umlaufgetriebe eingesetzt.

Diese Getriebe sind in der Lage, innerhalb einer Umdrehung, die Umfangsgeschwindigkeit des Rundkammes auf mehr als das Doppelte zu beschleunigen und unmittelbar danach wieder auf den Ausgangswert zu verzögern. Beschleunigungen, die der nahezu 10-fachen Erdbeschleunigung entsprechen, müssen dabei realisiert werden.

Die dafür notwendigen Getriebeelemente müssen sehr stabil ausgebildet sein. Die extrem wechselnde, hohe Belastung führt in kurzer Zeit zum Verschleiß.
Die ersten Verschleißmarken beeinflussen die Bewegungsgesetze derart, daß stoßartige Belastungen nicht zu vermeiden sind.

Das führt bei den üblichen Drehzahlen bereits zu erheblichen Laufgeräuschen, die die Grenze des Zulässigen bereits überschreiten, und zu einem Verschleiß, der häufigen Maschinenstillstand und hohe Wartungskosten verursacht.

Bei weiteren Drehzahlerhöhungen steigt die Lärmbelästigung und der Verschleiß progressiv an.

Alle Versuche, den Rundkamm mit anderen Mitteln anzutreiben, sind bisher gescheitert.

Die Anwendung eines elektrischen Einzelantriebes für den Antrieb des Rundkammes ist bisher wegen der extremen Belastungen von vorn herein nicht in Betracht gezogen worden.

Einerseits fürchtete man einen zu extremen Energieaufwand, der mit herkömmlichen elektrischen Anordnungen nicht kompensierbar ist.
Andererseits müßte der Läufer allein für das Aufbringen der notwendigen Kräfte derart dimmensioniert sein, daß seine Masse, die wie der Rundkamm beschleunigt werden müßte, größer wäre als die des Rundkammes ansich.

Zur Umgehung dieses Dilemmas legt der Stand der Technik nahe, zwischen Motor und Rundkamm ein Untersetzungsgetriebe vorzusehen. Auch dieses Untersetzungsgetriebe erfordert wieder zusätzliche Massen, die in gleicher Weise beschleunigt werden müssen.
Aus den genannten Gründen hat man Einzelantriebe für diesen Rundkamm bisher nicht in Betracht gezogen.

Die Aufgabe der vorliegenden Erfindung ist es, die Voraussetzungen dafür zu schaffen, daß der Rundkamm mit vertretbarem Aufwand und vertretbaren Netzbelastungen mit einem elektrischen Einzelantrieb versehen werden kann.

Erfindungsgemäß wird diese Aufgabe durch die im Anspruch 1 definierten Elemente gelöst.
Durch die Einbeziehung des die Kämmelemente des Rundkammes tragenden Gehäuses in den Rotor des Motors, wird einerseits das Getriebe zwischen Motor und Rundkamm eingespart.
Zum anderen wird das stabile, metallische, zylindrische Gehäuse des Rundkammes unmittelbar zum Bestandteil der magnetischen Rückschlußelemente und zum Träger für die getriebenen Magnetelemente des Motors.

Die Masse der mit wechselnden Geschwindigkeiten anzutreibenden Elemente wird somit auf das unbedingt notwendige Maß reduziert.

Die elektrischen Netzbelastungen beschränken sich auf ein Maß, das für den Dauerbetrieb vertretbar ist.

Mit der Gestaltung der Magnetelemente nach Anspruch 2 arbeitet der Antriebsmotor als permanent erregter Synchronmotor.

Die Lösung nach Anspruch 3 führt zu einem Kurzschlußläufermotor, der als Asynchronmotor steuerbar ist.

Mit Anspruch 4 kann man die Masse des Rundkammes zusätzlich reduzieren.

Die Erfindung soll nachfolgend an einem Ausführungsbeispiel näher erläutert werden. In den dazugehörigen Zeichnungen zeigen,
- Fig.1: einen Querschnitt durch die Arbeitselemente einer Kämmaschine,
- Fig.2: einen Längsschnitt durch die Rundkammwalze entlang der Linie II-II in Fig.1
- Fig.3: eine Teilansicht entsprechend Fig. 2 mit Kurzschlußwicklung und
- Fig.4: ein Weg-Zeit-Schaubild für den Umfang des Rundkammes für eine Umdrehung.

Die Kämmaschine nach dem Ausführungsbeispiel wird vorwiegend für das Kämmen von Wolle eingesetzt.

Die Anwendung der Erfindung ist jedoch nicht auf eine derart spezifizierte Maschine beschränkt. Die Anwendung an Baumwollkämmaschinen wird als naheliegend angesehen.

Bei der vorliegenden Kämmaschine wird eine Faserschicht (Vlies 6) über Speisewalzen 1 einem Zangenaggregat 2 zugeführt.
Das Zangenaggregat 2 stellt in zyklischen Bewegungsabläufen jeweils einen Faserbart zur Verfügung, dessen vorderes Ende durch die Kämmelemente 52 des Rundkammes 5 ausgekämmt wird.
Dieser ausgekämmte Faserbart wird im Bereich der Abzugswalzen 4 an den zuvor gekämmten Faserbart des gekämmten Vlieses 61 angelegt und von dort durch das Transportband 41 den Lieferwalzen 42 zugeführt.

Der Zangenapparat 2 führt zu diesem Zweck im wesentlichen nur eine Schließ- und Hubbewegung aus, während sich die Abzugsanordnung 4,41,42 zur Übernahme des Faserbartes dem Zangenapparat 2 annähern und dann wieder von ihm entfernen.

Zur Sicherung eines optimalen Kämmvorganges durch den Rundkamm 5 wird der Rundkamm 5 diskontinuierlich angetrieben.
Das bedeutet, daß die Drehzahl des Rundkammes innerhalb eines Kämmspieles einer sehr erheblichen Schwankung unterliegt.
In der Kämmphase wird der Rundkamm 5 beschleunigt und erreicht im Maximum eine Drehzahl, die etwa dem 2,25-fachen der mittleren Drehzahl entspricht.

In der Phase, in der der Rundkamm 5 unwirksam ist, der gekämmte Bart angelegt und ein neuer Faserbart bereitgestellt wird, wird die Winkelgeschwindigkeit des Rundkammes 5 etwa bis auf etwa die Hälfte der Durchschnittsdrehzahl reduziert (vergl.Fig 4).
Die bei dieser Antriebsbewegung auftretenden extremen Beschleunigungs- und Verzögerungskräfte erfordern einen sehr hohen Energieaufwand beim Antrieb des Rundkammes.

Bei bisher verwendeten Antrieben wurde die Antriebsbewegung von der kontinuierlich umlaufenden Hauptwelle abgenommen und durch exzentrisch/elyptisch ausgebildete Zahnräder in die gewünschte pulsierende Drehbewegung umgewandelt.

Die Beschleunigungen und Verzögerungen wurden durch die umlaufenden Massen der Gesamtmaschine im Wesentlichen kompensiert. Rückwirkungen auf den elektrischen Antrieb und auf das Netz waren somit weitgehend verhindert.

Die gegenwärtige Entwicklungstendenz geht dahin, daß komplizierte Antriebsbewegungen in zunehmendem Maße durch lagegeregelte bzw. gesteuerte elektrische Antriebe auszuführen.
Bei derartigen Antrieben wirken sich die unterschiedlichen Beschleunigungskräfte unmittelbar auf die Energieaufnahme aus dem Nezt aus.
Das bedeutet, daß für den Beschleunigungsvorgang eine sehr hohe Leistung aus dem Netz entnommen wird und beim folgenden Verzögerungsvorgang, bei Generatorbetrieb eine ähnlich große Energiemenge an das Netz zurückgeführt wird.
Insoweit gleicht sich das Energieniveau auf einem mittleren Niveau wieder aus.

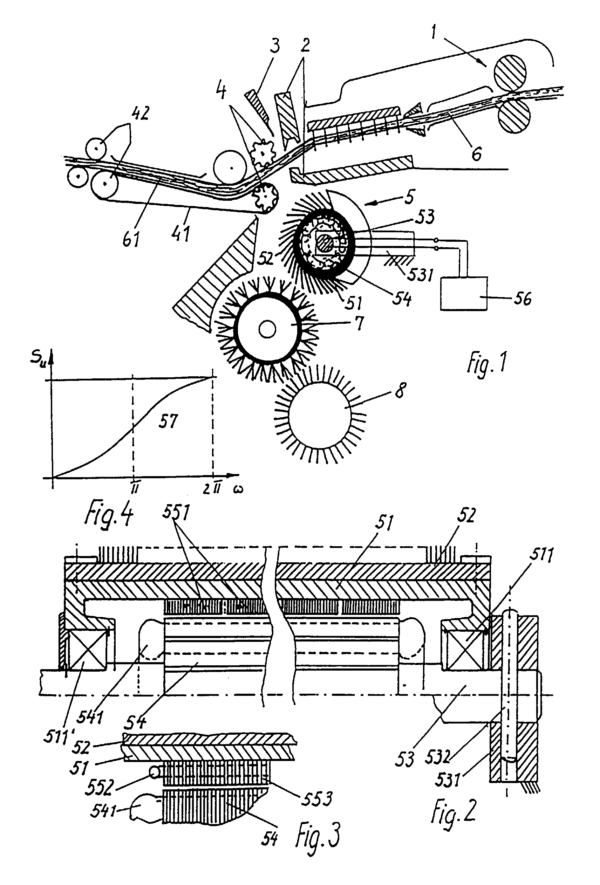

In Anbetracht der aus textiltechnologischen Gründen notwendigen Masse des Rundkammes 5 und der geforderten Präzision dieses pulsierenden Antriebes ist für den Rundkamm 5 ein extrem leistungstarker Antrieb notwendig.
Nach der vorliegenden Erfindung wird der Rundkamm 5 als Baueinheit mit dem Antriebsmotor 54,55 gestaltet (Fig.2).
Auf der Achse 53 des Rundkammes, die vorzugsweise mit Über das Lager 531 und die Lagesicherung 532 mit dem Gestell der Maschine fest verbunden ist, sind die Bauelemente des Ständers 54 mit den Ständerwicklungen 541 eines Außenläufermotors in ansich bekannter Weise angeordnet und mit der Steuerung 56 verbunden.

Das die Kämmelemente 52 des Rundkammes 5 tragende zylindrische Gehäuse 51 ist an beiden Enden mit Seitenscheiben versehen, die Lager 511,511' besitzen, durch die das Gehäuse 51 präzise und stabil auf der Rundkammachse 53 geführt ist.

An der Innenseite des Gehäuses 51 sind nach den Gesetzen der Konstruktion von Motoren Magnetelemente befestigt. Der Rückschluß dieser Magnetanordnungen 55 wird vorzugsweise durch das metallische Gehäuse 51 gebildet.

Es ist natürlich auch möglich, den zylindrischen Teil des Gehäuses 51 aus zwei ineinander gefügten Teilen herzustellen. Wesentlich für die Nutzung des Erfindungsgedankens ist, daß das Gehäuse 51 als Ganzes die Stabilität aufweist, die es für die Ausführung des Kämmvorganges besitzen muß.

Im vorliegenden Falle bildet der einteilige metallische Mantel des Gehäuses 51 das Rückschlußelement. An seiner Innenseite sind die magnetfelderzeugenden Elemente, Permanentmagnete 551 oder Kurzschlußwicklungen 552 auf Blechpaketen 553 (Fig. 3) befestigt.

In Abhängigkeit vom gewählten Motortyp sind die magnetfelderzeugenden Elemente entweder Permanentmagnete 551 (permanent erregter Synchronmotor), Kurzschlußwicklungen 552,553 (Asynchronmotor) oder Kurzschlußwicklungen mit ausgeprägter Luftspaltteilung (synchroner Reluktanzmotor).

An der Außenseite des zylindrischen Mantels des Gehäuses 51 sind unmittelbar oder an einem, sich auf dem Mantel abstützenden Träger (nicht dargestellt), die Kämmelemente 52 des Rundkammes 5 angeordnet.

Mit einer derartigen Ausführungsform kann man die durch den Motor 54,55 zu beschleunigenden oder zu verzögernden Massen auf das unbedingt notwendige Minimum reduzieren.

Die für die stabile Lagerung der magnetischen Elemente 551, 552 und für deren magnetischen Rückschluß notwendigen stabilen Gehäuseelemente 51, der Mantel, wird gleichzeitig Träger der Kämmelemente 52.

Die diskontinuierlich zu bewegende Masse wird so auf einen extrem niedrigen Wert gebracht, der, mit einem Motor vertretbarer Größe und Kostenstruktur, in der Kämmaschine beherrschbar ist.

Als vorteilhaft hat es sich erwiesen, die Bürstwalze 7 mit dem Antrieb des Rundkammes 5 mechanisch zu verbinden. Die Kämmlingswalze 8 sollte separat angetrieben werden.

### Aufstellung der verwendeten Bezugszeichen

- 1: Speisewlze
- 2: Zangenapparat
- 3: Fixkamm
- 4: Abreißwalzen
- 41: Transportband
- 42: Lieferwalzen

- 5: Rundkamm
- 51: Gehäuse (Läufer)
- 52: Kämmelemente
- 53: Rundkammachse

- 54: Stator
- 541: Statorwicklung
- 55: Magnetanordnung (Läufer)
- 551: Permanentmagnete
- 552: Kurzschlußwicklung
- 553: Blechpaket

- 56: Steuerung
- 57: Weg-Winkel-Kurve (Rundkamm)

- 6: Vlies
- 61: Vlies gekämmt

- 7: Bürstenwalze
- 8: Kämmlingswalze

- Su: Weg - Umfang Rundkamm
- ω: Winkel

## Patentansprüche

1. Kämmaschinen mit elektrischen Einzelantrieben für mehrere Achsen
- mit einer Steuerung zur Synchronisation der Einzelantriebe
- mit einem diskontinuierlich angetriebenen Rundkamm und
- mit einem synchron zum Rundkamm mit Schließbewegung angetriebenen Zangenapparat,
dadurch gekennzeichnet,
daß für den diskontinuierlichen Antrieb des Rundkammes (5) ein elektrischer Einzelantrieb (54,55) vorgesehen ist,
daß dieser Einzelantrieb (54,55) als Außenläufermotor ausgebildet ist,
- dessen Stator (54) auf der Rundkammachse (53) mit einer Ständerwicklung (541) angeordnet ist und
- dessen Rotor ein zum Stator (54) konzentrisches Gehäuse (51) besitzt, das Bestandteil der magnetischen Rückschlußelemente des Außenläufermotors ist und an dessen Außenwand die Kämmelemente (52) des Rundkammes (5) befestigt sind.

2. Kämmaschine nach Anspruch 1, dadurch gekennzeichnet,
daß an der Innenwand des als Rückschlußelement dienendem Gehäuse (51) des Rotors Permanentmagnete (551) befestigt sind.

3. Kämmaschinen nach Anspruch 1, dadurch gekennzeichnet,
daß das Gehäuse (51) an seiner Innenwand Blechpakete ((553) für die Kurzschlußwicklung (552) eines Asynchronmotors trägt.

4. Kämmaschine nach Anspruch 1 bis 3, dadurch gekennzeichnet,
daß die Außenwand des Gehäuses (51) als Befestigungsfläche für die einzelnen Kämmelemente (52) ausgebildet ist.

## Claims

1. Combing machines with individual electric drives for several axes
- with a control for synchronizing the individual drives;
- with a discontinuously driven circular comb; and
- with a synchronously to the circular comb driven nipper apparatus in closing operation;
characterized by the following features:
an individual electric drive (54,55) provided for the discontinuous drive of the circular comb (5);
said individual electric drive (54,55) being an external rotor motor;
- the stator (54) of which being arranged on the axis of the circular comb (53) by means of a stator winding (541);
- the rotor of which having a housing (51) which is concentric with respect to the state (54) and which is part of the magnetic back-circuit elements of the external rotor motor and the outside contour of which carries the combing elements (52) of the circular come (5).

2. Combing machine according to Claim 1, characterized by the fact that
the inside of the rotor housing (51), serving as part of the magnetic back-circuit elements, carries permanent magnets (551).

3. Combing machines according to Claim 1, characterized by the fact that
the housing (51) on the inside carries bundles of laminations (553) for the squirrel-cage winding (552) of an asynchronous motor.

4. Combing machine according to Claims 1 to 3, characterized by the fact that
the outside contour of the housing (51) is designed as a seating for the individual combing elements (52).

## Revendications

1. Peigneuses avec différents dispositifs d'entraînement électriques pour plusieurs axes
- avec un système de commande servant à la synchronisation des différents dispositifs d'entraînement
- avec un peigne circulaire commandé en discontinu et
- avec un synchro au niveau du peigne circulaire avec un appareil à pinces commandé par une avance de serrage,
caractérisées en ce que
un dispositif d'entraînement individuel électrique (54,55) est prévu pour le dispositif d'entraînement en discontinu du peigne circulaire (5),
en ce que ledit dispositif d'entraînement individuel (54,55) est constitué comme moteur à induit extérieur,
- dont le stator (54) est disposé sur l'axe du peigne circulaire (53) avec une bobine de stator (541) et
- dont le rotor dispose d'un carter (51) concentrique par rapport au stator (54) et qui fait partie des éléments magnétiques de fermeture arrière du moteur à induit extérieur et sur la paroi extérieure duquel sont fixés les éléments de peignage (52) du peigne circulaire (5).

2. Peigneuse selon la revendication 1, caractérisée en ce que des aimants permanents (551) sont fixés à la paroi intérieure du carter (51) du rotor servant d'élément de fermeture arrière.

3. Peigneuses selon la revendication 1, caractérisées en ce que,
le carter (51) comporte, au niveau de sa paroi intérieure, des empilages de tôles (553) pour l'enroulement à court-circuit (552) d'un moteur asynchrone.

4. Peigneuse selon les revendications 1 à 3, caractérisée en ce que,
la paroi extérieure du carter (51) est constituée comme surface de fixation des différents éléments de peignage (52).
